# EUROPÄISCHE PATENTSCHRIFT

(11) **EP 3 031 600 B1**
(45) Veröffentlichungstag und Bekanntmachung des Hinweises auf die Patenterteilung: **14.11.2018**
(21) Anmeldenummer: 15185169.8
(22) Anmeldetag: 15.09.2015
(51) Int. Cl.: B29D 30/24, B29D 30/26

(54) **VORRICHTUNG ZUM AUFWICKELN VON REIFENBAUTEILEN AUF EINER REIFENAUFBAUTROMMEL**
DEVICE FOR WINDING OF TYRE COMPONENTS ON A TYRE DRUM
PROCEDE D'ENROULEMENT DE COMPOSANTS DE PNEU SUR UN TAMBOUR DE FABRICATION DE PNEU

(30) Priorität: 12.12.2014 DE 102014225676
(43) Veröffentlichungstag der Anmeldung: 15.06.2016
(73) Patentinhaber: Continental Reifen Deutschland GmbH, 30165 Hannover (DE)
(72) Erfinder: Bergmann, Sascha, 30179 Hannover (DE)
(74) Vertreter: Widjaja, Wira

(56) Entgegenhaltungen:
- EP-A2- 1 767 337
- WO-A1-2004/045839
- WO-A1-2014/049534
- DE-A1- 2 124 978
- JP-A- H08 174 710
- JP-A- 2007 050 539
- JP-A- 2012 081 660
- US-A- 3 790 425
- US-A- 4 685 992

## Beschreibung

Die Erfindung betrifft eine Vorrichtung zum Aufwickeln von Reifenbauteilen auf einer Reifenaufbautrommel zur Herstellung eines Gürtel-Laufstreifenpaketes gemäß dem Oberbegriff des Anspruches 1.

Bei Reifenaufbautrommeln ist bekannt, dass diese aus einzelnen Segmenten bestehen, die beim Expandieren radial auseinander fahren. Das Auseinanderfahren der einzelnen Trommelsegmente kann über unterschiedliche Getriebe und Verfahreinheiten erfolgen. Diese Verfahreinheiten sind in der Regel komplex aufgebaut und gewährleisten ein präzises Zusammenfügen von einzelnen Reifenaufbauteilen.

Das Gürtel-Laufstreifenpaket wird im Normalfall auf einer sogenannten Gürteltrommel aufgebaut. Die Gürteltrommel hat eine zylindrische Oberfläche, auf die die einzelnen Reifenbauteile aufgewickelt werden. Diese zylindrische Kontur entspricht nicht der Gürtelkontur wie sie später nach der Reifenvulkanisation im fertig hergestellten Fahrzeugreifen vorliegen soll. Bei einer gekrümmten Aufwickelfläche an der Reifenaufbautrommel ergeben sich unter bestimmten Umständen Probleme bei der Genauigkeit des Auflegens der Reifenbauteile.

Aus der EP 1 767 337 A2 ist eine Vorrichtung zum Aufbauen eines Radialreifens bekannt, welche eine expandierbare zylindrische Gürteltrommel und eine zweite konturiert ausgeführte Gürteltrommel aufweist. Auf der äußeren Oberfläche der zweiten Gürteltrommel kann eine konturierte Manschette aufgespannt sein oder es können die Trommelsegmente der zweiten Gürteltrommel selbst konturiert sein. Zum Aufbauen des Radialreifens werden Gürtellagen auf die zylindrische Gürteltrommel aufgelegt und gespleißt. Die gespleißten Gürtellagen werden von einem Gürteltragring aufgenommen und seitlich in eine Warteposition gebracht. Anschließend werden die Positionen der beiden Gürteltrommeln mittels einer Dreheinrichtung getauscht. Der Gürteltragring wird über die konturierte Gürteltrommel verfahren, auf welcher die Gürtellagen aufgelegt und konturiert werden. Abschließend wird eine Spulbandage auf den Gürtelverband aufgebracht und auf einer Bombierstation der Rohreifen fertig aufgebaut.

Aus der US 3,790,425 ist eine weitere Vorrichtung zum Reifenaufbau bekannt. Der Aufbau von Gürtel-Laufstreifen-Paketen erfolgt auf einer Trommel, deren äußere Oberfläche mit einer Vielzahl von über den Trommelumfang umlaufenden schmalen Rillen oder Einkerbungen versehen ist. Die Rillen bzw. Einkerbungen sind mit einem magnetischen elastomeren Material gefüllt, welches beispielsweise Bariumferritpartikel enthält. Das magnetische Material übt eine Anziehungskraft auf die metallischen Korde in den Gürtellagen aus und unterstützt dadurch ein präzises Auflegen der Gürtellagen auf der Trommel.
Der Erfindung lag die Aufgabe zugrunde, eine Vorrichtung bereitzustellen, mit dem die Genauigkeit beim Aufwickeln von Reifenaufbauteilen verbessert wird.
Gelöst wird die Aufgabe durch eine Vorrichtung gemäß den kennzeichnenden Merkmalen von Anspruch 1, dadurch dass
die äußere Trommeloberfläche durch eine umlaufende Gummimanschette überdeckt wird und die Gummimanschette auf der Außenseite eine im Querschnitt konvexe Kontur aufweist,
wobei durch die konvexe Kontur der Gummimanschette dem herzustellenden Gürtelpaket eine gekrümmte Kontur aufgeprägt wird,
wobei im Gummimaterial der Gummimanschette eine Vielzahl von Magneten zur Fixierung und Führung der an der Gummimanschette anliegenden Gürtellage angeordnet sind,
wobei die Gummimanschette auf der Unterseite eine Nut aufweist,
wobei auf der Oberseite von mindestens einem Trommelsegment ein Steg angeordnet ist,
wobei die Gummimanschette mit der Nut und dem Steg in axialer Richtung formschlüssig auf dem Trommelsegment fixiert wird.

Ein Vorteil der Erfindung ist insbesondere darin zu sehen, dass die Genauigkeit beim Aufwickeln der Reifenbauteile auf eine konturierte Reifenaufbautrommel wesentlich verbessert wird. Gürtellagen für Fahrzeugreifen besitzen im Allgemeinen Festigkeitsträger aus metallischen Werkstoffen. Durch die Magnete in der Gummimanschette wird die Gürtellage in einer genau vorgegebenen Position auf der Reifenaufbautrommel positioniert. Außerdem werden die seitlichen Bereiche der Gürtellage von den jeweiligen seitlichen Magneten in der Gürtelmanschette angezogen. Dadurch erhält das Gürtelpaket beim Aufwickelprozess direkt eine gekrümmte Kontur. Die gekrümmte Kontur des Gürtelpaketes verbessert insbesondere die nachfolgende Vulkanisation des Fahrzeugreifens. Außerdem lassen sich mit der konturierten Gürteltrommel Fahrzeugreifen herstellen, die verbesserte Fahreigenschaften besitzen. Durch die formschlüssige Verbindung zwischen Gummimanschette und Oberseite der Trommelsegmente wird die Gummimanschette in einer festen Position auf der Gürteltrommel fixiert. Auf diese Weise wird ebenfalls die Genauigkeit beim Aufwickeln der Gürtellagen verbessert.

In einer vorteilhaften Weiterbildung der Erfindung ist vorgesehen, dass die Nut in der Gummimanschette und der Steg im Querschnitt rechteckig ausgebildet sind.
Auf diese Weise wird eine hohe Positioniergenauigkeit der Gürtelmanschette auf der Gürteltrommel gewährleistet.

In einer weiteren vorteilhaften Weiterbildung der Erfindung ist vorgesehen, dass der Steg in Form einer Metallplatte ausgebildet ist und mit einer Schraubverbindung auf der Oberseite des Trommelsegmentes befestigt ist.
Dadurch lässt sich der Steg auf der Gürteltrommel auf einfache Weise wieder demontieren. Die Gürteltrommel kann dann auch zur Herstellung eines Gürtelpaketes eingesetzt werden ohne die Gummimanschette einzusetzen.

In einer weiteren vorteilhaften Weiterbildung der Erfindung ist vorgesehen, dass mindestens vier Trommelsegmente auf der Oberseite mit Stegen versehen sind.
Dadurch wird eine feste umlaufende Fixierung der Gummimanschette auf der Gürteltrommel gewährleistet.

In einer weiteren vorteilhaften Weiterbildung der Erfindung ist vorgesehen, dass die Magnete in der Gummimanschette in Form von umlaufenden Magnetstreifen ausgebildet sind.
Auf diese Weise wird die an der Gummimanschette anliegende Gürtellage fest auf der Oberseite der Gummimanschette während des Aufwickelprozesses fixiert.

In einer weiteren vorteilhaften Weiterbildung der Erfindung ist vorgesehen, dass die Magnete in der Gummimanschette in Form von Magnetplatten ausgebildet sind, wobei die Magnetplatten nur in lokal begrenzten Umfangsabschnitten in der Gummimanschette angeordnet sind.
Dadurch lässt sich unter Umständen die Herstellung der Gummimanschette mit den Magnetplatten vereinfachen.

In einer weiteren vorteilhaften Weiterbildung der Erfindung ist vorgesehen, dass die Magnete in der Gummimanschette in Form von Magnetpunkten ausgebildet sind, wobei die Magnetpunkte nur in lokal begrenzten Umfangsabschnitten in der Gummimanschette angeordnet sind.
Dadurch lässt sich die Herstellung der Gummimanschette mit den Magneten vereinfachen.

In einer weiteren vorteilhaften Weiterbildung der Erfindung ist vorgesehen, dass die Magnete unter der Oberseite der Gummimanschette angeordnet sind, wobei die Anordnung der Magnete in der Gummimanschette gekrümmt und an die Außenseite der Gummimanschette angepasst ist.
Dadurch besitzen die Magnete in der Gummimanschette einen besonders hohen Wirkungsgrad. Die Magnete können die anliegende Gürtellage mit einer hohen Anziehungskraft an die Oberseite der Gummimanschette anziehen.

In einer weiteren vorteilhaften Weiterbildung der Erfindung ist vorgesehen, dass die Magnete in der Gummimanschette in der Querschnittansicht symmetrisch angeordnet sind, wobei insgesamt mindestens 6 Magnete in einem Querschnitt der Gummimanschette angeordnet sind.
Dadurch wird die anliegende Gürtellage mit einer hohen Positioniergenauigkeit auf der Gürtelmanschette fixiert.
Die Magnete erhöhen die Haftung auf der Gürtelmanschette. Dies ermöglicht einen stabilen Prozessablauf und es kann sichergestellt werden, dass der aufgebrachte Gürtel im weiteren Prozessverlauf nicht verrutscht. Dadurch wird letztendlich die Genauigkeit des Auflegeprozesses verbessert.

In einer weiteren vorteilhaften Weiterbildung der Erfindung ist vorgesehen, dass die Materialdicke der Magnete ca. 1 bis 3 mm und die Materialbreite der Magnete ca. 5 bis 15 mm beträgt.
Bei diesen Abmessungen lassen sich die Magnete optimal in der Gummimanschette positionieren. Außerdem besitzen Sie eine ausreichend hohe Anziehungskraft, um die Gürtellage auf der Gummimanschette zu fixieren.

Anhand eines Ausführungsbeispiels soll die Erfindung näher erläutert werden. Es zeigen:
- Fig. 1:: Die Reifenaufbautrommel bzw. Gürteltrommel in einer Seitenansicht
- Fig. 2:: Die Gummimanschette mit den Magneten

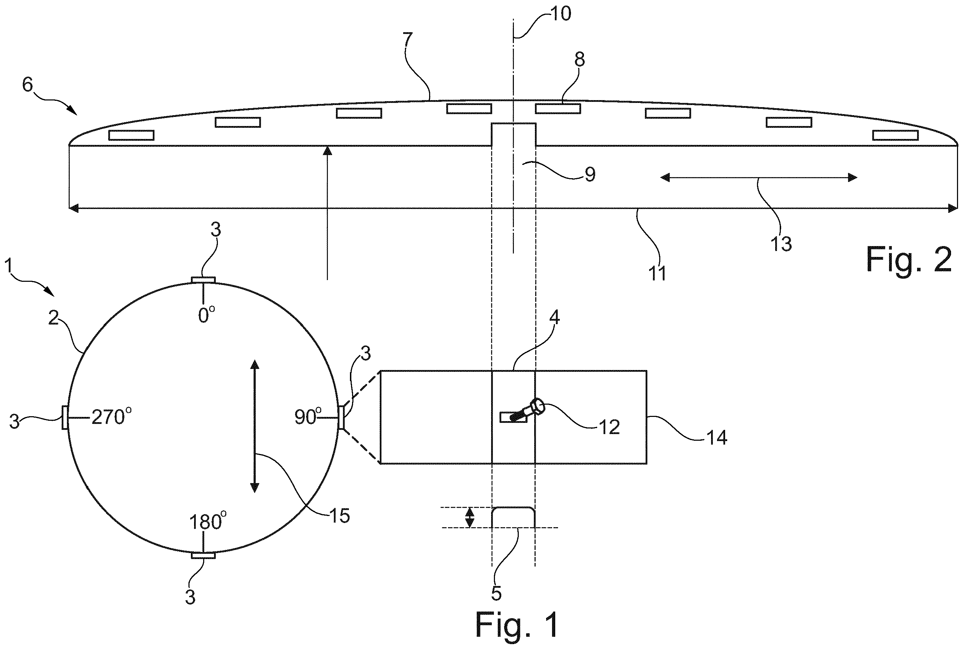

Die Fig. 1 zeigt die Gürteltrommel in einer Seitenansicht. Die äußere Trommeloberfläche 2 wird durch radial verfahrbare Trommelsegmente gebildet, die in der Figur jedoch nicht im Einzelnen dargestellt sind. Auf der Trommeloberfläche 2 sind 4 Stege in Form einer Metallplatte 3 symmetrisch angeordnet. Die Stege 3 dienen dazu, die Gummimanschette 6 in der Figur 2 fest auf der Gürteltrommel zu fixieren. Die rechte Darstellung in der Fig. 1 zeigt eine Aufsicht auf die Oberseite eines einzelnen Trommelsegmentes 14. Auf diesem Trommelsegment ist der Steg 4 in Form einer Metallplatte in der Aufsicht dargestellt. Die Metallplatte 4 wird mit einer lösbaren Schraube auf der Oberseite des Trommelsegmentes fixiert. Die Metallplatte 5 ist ebenfalls in einer Querschnittansicht dargestellt. Die Breite des Steges beträgt ca. 10 mm.

Die Fig. 2 zeigt die Gummimanschette 6 in einer Querschnittansicht. Die Gummimanschette 6 deckt die äußere Trommeloberfläche 2 in der Fig. 1 vollständig ab. Die Außenseite 7 der Gummimanschette 6 besitzt eine nach außen gebogene konvexe Kontur. Beim Aufwickeln der Gürtellagen auf die Gummimanschette 6 passt sich das Gürtelpaket auf der Unterseite dieser gekrümmten Kontur der Gummimanschette an. In der Gummimanschette 6 sind 8 Magnete 8 angeordnet, die symmetrisch zu Trommelmitte 10 ausgerichtet sind. Die Magnete 8 sind z.B. in Form eines umlaufenden Magnetstreifens ausgebildet, die die Gummimanschette 6 vollständig über seinen Umfang durchziehen. Auf der Unterseite der Gummimanschette 6 ist eine Nut 9 angeordnet. Der Steg 3 auf der Trommeloberfläche greift in diese Nut ein und fixiert die Gummimanschette 6, insbesondere in axialer Richtung 13. Dadurch kann die Gummimanschette 6 nicht mehr in axialer Richtung 13 auf der Trommeloberfläche 2 verrutschen. Beim Aufwickeln der Gürtellagen auf die Gürteltrommel 1 werden die Gürtellagen mit den Magneten auf der Oberseite der Gummimanschette fixiert und geführt. Durch die Anziehungskraft der Magnete erhält das Gürtelpaket auf seiner Unterseite ebenfalls eine gekrümmte Kontur.

### Bezugszeichenliste

### (ist Teil der Beschreibung)

- 1: Reifenaufbautrommel bzw. Gürteltrommel
- 2: äußere Trommeloberfläche
- 3: Steg in Form einer Metallplatte
- 4: Steg in Form einer Metallplatte in der Aufsicht
- 5: Steg in Form einer Metallplatte in der Querschnittansicht
- 6: Gummimanschette
- 7: Außenseite der Gummimanschette mit konvexer Kontur
- 8: Magnet, z.B. in Form eines umlaufenden Magnetstreifens
- 9: Nut auf der Unterseite der Gummimanschette
- 10: Trommelmitte
- 11: Breite der Gummimanschette
- 12: Schraube
- 13: axiale Richtung
- 14: Trommelsegment
- 15: radiale Richtung

## Patentansprüche

1. Vorrichtung zum Aufwickeln von Reifenbauteilen auf einer Reifenaufbautrommel (1) zur Herstellung eines Gürtel-Laufstreifenpaketes,
wobei die Reifenaufbautrommel (1) in radialer Richtung expandierbare Trommelsegmente (14) aufweist und die äußere Trommeloberfläche (2) durch die äußere Oberfläche der einzelnen Trommelsegmente (14) gebildet wird,
wobei die äußere Trommeloberfläche (2) in Form eines Zylinders ausgebildet ist und durch die expandierbaren Trommelsegmente (14) verkleinert oder vergrößert werden,
wobei die Reifenaufbautrommel (1) zum Aufwickeln der Reifenbauteile in Umfangsrichtung drehbar gelagert ist,
**dadurch gekennzeichnet, dass**
die äußere Trommeloberfläche (2) durch eine umlaufende Gummimanschette (6) überdeckt wird und die Gummimanschette (6) auf der Außenseite (7) eine im Querschnitt konvexe Kontur aufweist,
wobei durch die konvexe Kontur der Gummimanschette (6) dem herzustellenden Gürtelpaket eine gekrümmte Kontur aufgeprägt wird,
wobei im Gummimaterial der Gummimanschette (6) eine Vielzahl von Magneten (8) zur Fixierung und Führung der an der Gummimanschette (6) anliegenden Gürtellage angeordnet ist, wobei die Gummimanschette (6) auf der Unterseite eine Nut (9) aufweist, wobei auf der Oberseite von mindestens einem Trommelsegment (14) ein Steg (3, 4) angeordnet ist, wobei die Gummimanschette (6) mit der Nut (9) und dem Steg (3, 4) in axialer Richtung (13) formschlüssig auf dem Trommelsegment (14) fixiert wird.

2. Vorrichtung nach Anspruch 1,
**dadurch gekennzeichnet, dass**
die Nut (9) in der Gummimanschette (6) und der Steg (4) im Querschnitt rechteckig ausgebildet sind.

3. Vorrichtung nach einem der vorhergehenden Ansprüche,
**dadurch gekennzeichnet, dass**
der Steg (3, 4) in Form einer Metallplatte ausgebildet ist und mit einer Schraubverbindung auf der Oberseite des Trommelsegmentes (14) befestigt ist.

4. Vorrichtung nach einem der vorhergehenden Ansprüche,
**dadurch gekennzeichnet, dass**
mindestens vier Trommelsegmente (14) auf der Oberseite mit Stegen (3, 4) versehen sind.

5. Vorrichtung nach einem der vorhergehenden Ansprüche,
**dadurch gekennzeichnet, dass**
die Magnete (8) in der Gummimanschette (6) in Form von umlaufenden Magnetstreifen ausgebildet sind.

6. Vorrichtung nach einem der vorhergehenden Ansprüche,
**dadurch gekennzeichnet, dass**
die Magnete (8) in der Gummimanschette in Form von Magnetplatten ausgebildet sind,
wobei die Magnetplatten auf dem Umfang verteilt oder nur in lokal begrenzten Umfangsabschnitten in der Gummimanschette (6) angeordnet sind.

7. Vorrichtung nach einem der vorhergehenden Ansprüche,
**dadurch gekennzeichnet, dass**
die Magnete (8) in der Gummimanschette (6) in Form von Magnetpunkten ausgebildet sind,
wobei die Magnetpunkte auf dem Umfang verteilt oder nur in lokal begrenzten Umfangsabschnitten in der Gummimanschette (6) angeordnet sind.

8. Vorrichtung nach einem der vorhergehenden Ansprüche,
**dadurch gekennzeichnet, dass**
die Magnete (8) unter der Oberseite der Gummimanschette (6) angeordnet sind,
wobei die Anordnung der Magnete (8) in der Gummimanschette (6) gekrümmt und an die Außenseite der Gummimanschette (6) angepasst ist.

9. Vorrichtung nach einem der vorhergehenden Ansprüche,
**dadurch gekennzeichnet, dass**
die Magnete (8) in der Gummimanschette (6) in der Querschnittansicht symmetrisch angeordnet sind,
wobei insgesamt mindestens 6 Magnete (8) in einem Querschnitt der Gummimanschette (6) angeordnet sind.

10. Vorrichtung nach einem der vorhergehenden Ansprüche,
**dadurch gekennzeichnet, dass**
die Materialdicke der Magnete (8) 1 bis 3 mm und die Materialbreite der Magnete (8) 5 bis 15 mm beträgt.

## Claims

1. Device for winding tyre components on a tyre building drum (1) for producing a belt-tread package,
wherein the tyre building drum (1) has drum segments (14) that are expandable in the radial direction and the outer drum surface (2) is formed by the outer surface of the individual drum segments (14),
wherein the outer drum surface (2) takes the form of a cylinder and be reduced or increased in size by the expandable drum segments (14),
wherein the tyre building drum (1) for winding the tyre components is mounted rotatably in the circumferential direction,
**characterized in that**
the outer drum surface (2) is covered by a peripheral rubber sleeve (6) and the rubber sleeve (6) has on the outer side (7) a cross-sectionally convex contour,
wherein the convex contour of the rubber sleeve (6) has the effect of imparting a curved contour to the belt package to be produced,
wherein a multiplicity of magnets (8) for fixing and guiding the belt ply lying against the rubber sleeve (6) are arranged in the rubber material of the rubber sleeve (6), wherein the rubber sleeve (6) has a groove (9) on the underside, wherein a ridge (3, 4) is arranged on the upper side of at least one drum segment (14), wherein the rubber sleeve (6) is fixed with interlocking engagement in the axial direction (13) on the drum segment (14) by the groove (9) and the ridge (3, 4).

2. Device according to Claim 1,
**characterized in that**
the groove (9) in the rubber sleeve (6) and the ridge (4) are rectangularly formed in cross section.

3. Device according to one of the preceding claims,
**characterized in that**
the ridge (3, 4) takes the form of a metal plate and is fastened on the upper side of the drum segment (14) by a screw connection.

4. Device according to one of the preceding claims,
**characterized in that**
at least four drum segments (14) are provided with ridges (3, 4) on the upper side.

5. Device according to one of the preceding claims,
**characterized in that**
the magnets (8) in the rubber sleeve (6) take the form of peripheral magnetic strips.

6. Device according to one of the preceding claims,
**characterized in that**
the magnets (8) in the rubber sleeve take the form of magnetic plates,
wherein the magnetic plates are arranged in the rubber sleeve (6) distributed over the circumference or only in locally confined circumferential portions.

7. Device according to one of the preceding claims,
**characterized in that**
the magnets (8) in the rubber sleeve (6) take the form of magnetic points,
wherein the magnetic points are arranged in the rubber sleeve (6) distributed over the circumference or only in locally confined circumferential portions.

8. Device according to one of the preceding claims,
**characterized in that**
the magnets (8) are arranged under the upper side of the rubber sleeve (6),
wherein the arrangement of the magnets (8) in the rubber sleeve (6) is curved and adapted to the outer side of the rubber sleeve (6).

9. Device according to one of the preceding claims,
**characterized in that**
the magnets (8) in the rubber sleeve (6) are arranged symmetrically when viewed in cross section, wherein altogether at least 6 magnets (8) are arranged in a cross section of the rubber sleeve (6).

10. Device according to one of the preceding claims,
**characterized in that**
the material thickness of the magnets (8) is 1 to 3 mm and the material width of the magnets (8) is 5 to 15 mm.

## Revendications

1. Dispositif d'enroulement de composants de pneu sur un tambour de fabrication de pneu (1) pour la fabrication d'un paquet de ceinture-bande de roulement,
dans lequel le tambour de fabrication de pneu (1) présente des segments de tambour (14) expansibles en direction radiale et la surface extérieure (2) du tambour est formée par la surface extérieure des segments de tambour individuels (14),
dans lequel la surface extérieure (2) du tambour est réalisée sous la forme d'un cylindre et être diminuée ou augmentée au moyen des segments de tambour (14) expansibles,
dans lequel le tambour de fabrication de pneu (1) est monté de façon rotative pour l'enroulement des composants de pneu en direction périphérique,
**caractérisé en ce que** la surface extérieure (2) du tambour est recouverte d'une manchette de caoutchouc périphérique (6) et la manchette de caoutchouc (6) présente sur le côté extérieur (7) un contour convexe en section transversale,
dans lequel un contour incurvé est conféré par le contour convexe de la manchette de caoutchouc (6) au paquet de ceinture à fabriquer,
dans lequel une pluralité d'aimants (8) sont disposés dans le matériau de caoutchouc de la manchette de caoutchouc (6) pour la fixation et le guidage de la couche de ceinture appliquée sur la manchette de caoutchouc (6), dans lequel la manchette de caoutchouc (6) présente sur le côté inférieur une rainure (9),
dans lequel une nervure (3, 4) est disposée sur le côté supérieur d'au moins un segment de tambour (14),
dans lequel la manchette de caoutchouc (6) est fixée par emboîtement en direction axiale (13) sur le segment de tambour (14) avec la rainure (9) et la nervure (3, 4).

2. Dispositif selon la revendication 1, **caractérisé en ce que** la rainure (9) dans la manchette de caoutchouc (6) et la nervure (4) sont réalisées sous forme rectangulaire en section transversale.

3. Dispositif selon l'une quelconque des revendications précédentes, **caractérisé en ce que** la nervure (3, 4) réalisée sous la forme d'une plaque de métal et est fixée par un assemblage vissé sur le côté supérieur du segment de tambour (14).

4. Dispositif selon l'une quelconque des revendications précédentes, **caractérisé en ce qu'**au moins quatre segments de tambour (14) sont munis de nervures (3, 4) sur le côté supérieur.

5. Dispositif selon l'une quelconque des revendications précédentes, **caractérisé en ce que** les aimants (8) sont réalisés dans la manchette de caoutchouc (6) sous la forme de bandes magnétiques périphériques.

6. Dispositif selon l'une quelconque des revendications précédentes, **caractérisé en ce que** les aimants (8) sont réalisés dans la manchette de caoutchouc sous la forme de plaques magnétiques, dans lequel les plaques magnétiques sont disposées dans la manchette de caoutchouc (6) de façon répartie sur la périphérie ou uniquement dans des parties de la périphérie limitées localement.

7. Dispositif selon l'une quelconque des revendications précédentes, **caractérisé en ce que** les aimants (8) sont réalisés dans la manchette de caoutchouc (6) sous la forme de points magnétiques, dans lequel les points magnétiques sont disposés dans la manchette de caoutchouc (6) de façon répartie sur la périphérie ou uniquement dans des parties de la périphérie limitées localement.

8. Dispositif selon l'une quelconque des revendications précédentes, **caractérisé en ce que** les aimants (8) sont disposés en dessous du côté supérieur de la manchette de caoutchouc (6), dans lequel l'agencement des aimants (8) dans la manchette de caoutchouc (6) est incurvé et adapté au côté extérieur de la manchette de caoutchouc (6).

9. Dispositif selon l'une quelconque des revendications précédentes, **caractérisé en ce que** les aimants (8) sont disposés dans la manchette de caoutchouc (6) de façon symétrique dans une vue en section transversale, dans lequel au total au moins 6 aimants (8) sont disposés dans une section transversale de la manchette de caoutchouc (6).

10. Dispositif selon l'une quelconque des revendications précédentes, **caractérisé en ce que** l'épaisseur de matière des aimants (8) vaut 1 à 3 mm et la largeur de matière des aimants (8) vaut 5 à 15 mm.
